# EUROPEAN PATENT APPLICATION

(11) **EP 2 439 742 A2**
(43) Date of publication of application: **11.04.2012**
(21) Application number: 11183868.6
(22) Date of filing: 04.10.2011
(51) Int. Cl.: G11B 27/10, G11B 27/30, G11B 20/12

(54) **Simultaneous reproducing of non-sequential multistandard audio and video data from an optical disk or from a network server**

(30) Priority: 05.10.2010 KR 20100096899
(71) Applicant: Samsung Electronics Co., Ltd., Suwon-si, Gyeonggi-do 442-742 (KR)
(72) Inventor: Song, Min-suk, Gyeonggi-do (KR)
(74) Representative: Brandon, Paul Laurence

(57) **Abstract**

A method for playing a moving picture file in which at least one video data and at least one audio file or data is arranged non-sequentially, in order to prevent performance deterioration due to frequent search for video and audio information is provided. The method includes calculating a total reproduction time of the at least one video data and the at least one audio data, calculating an amount of collected data of which total reproduction time is shorter than a predetermined total reproduction time while data of which total reproduction time is longer is reproduced, and collecting the data of which total reproduction time is shorter among the calculated amount of collected data while the data of which total reproduction time is longer is reproduced.

## Description

### CROSS-REFERENCE TO RELATED APPLICATIONS

This application claims priority from Korean Patent Application No. 2010-0096899, filed in the Korean Intellectual Property Office on October 5, 2010, the disclosure of which is incorporated herein by reference.

### BACKGROUND

### 1. Field

Methods and apparatuses consistent with the exemplary embodiments relate to playing moving picture files, and more particularly, to a method and an apparatus for playing moving picture files by collecting video data and audio data to play moving picture files.

### 2. Description of the Related Art

In order to play moving picture files (video and audio), an apparatus for playing moving picture files collects information regarding moving pictures (video and audio), decodes the collected information, converts the decoded information into video and audio information, and reproduces the converted video and audio information for a user. The exemplary embodiments relate to a method for collecting video and audio information before an apparatus for playing moving pictures files decodes the video and audio information.

In general, a moving picture playing apparatus collects video and audio information from a source using two methods.

First, a moving picture playing apparatus may collect video and audio information sequentially (serially) in the order that video and audio information is arranged. Secondly, a moving picture playing apparatus may collect video and audio information non-sequentially by analyzing the location of video and audio information which should be reproduced at the same time.

According to the first method, information is collected in the order of arrangement in a source without referring to any location information of moving picture files or without following any rules. Therefore, if video and audio information which should be reproduced at the same time is not adjacent to each other, one of video and audio information may not be reproduced since both information may not be collected at the same time.

The second method is introduced to remedy the above deficiency of the first method. Accordingly, if video and audio information which should be reproduced at the same time are not adjacent to each other, the location information of the video and audio information is identified before the video and audio information is collected, and an information collecting module moves to the identified location to retrieve the video and audio information.

In other words, a video and audio information collecting module obtains information regarding the location of the video and audio information which should be reproduced at the same time and moves to the obtained location to retrieve the video and audio information, and this operation is performed with respect to individual video and audio information.

Therefore, the second method requires frequent location changes in an apparatus having a moving picture source.

For example, if a moving picture source is stored in an optical device (OD), an optical disk drive (ODD) changes its location by moving a laser pick-up. Alternatively, if a moving picture source is stored in a remote server/storage unit, search and movement operation is performed to collect video and audio information which should be reproduced at the same time.

As such, if a moving picture source is stored in an optical device or a remote server/storage unit, search and movement operation is performed with respect to individual video and audio information included in a moving picture. Therefore, performance of a moving picture playing apparatus is significantly deteriorated compared to when information is collected sequentially. In addition, if a moving picture source is stored in a remote server/storage unit, connection with a sub-software layer is cut off when an operation of collecting video and audio information is requested and additional operation should be performed to search the corresponding information. Therefore, performance of a moving picture playing apparatus is compromised compared to when information is collected sequentially.

### SUMMARY

Aspects of the exemplary embodiments relate to a method for playing moving picture files to improve performance of a moving picture file playing apparatus which may be deteriorated due to frequent searches for video and audio information and a moving picture file playing apparatus applying the same.

A method of playing a moving picture file in which at least one video data and at least one audio file or data is arranged non-sequentially, according to an exemplary embodiment, includes collecting the at least one video data and the at least one audio data; calculating a total reproduction time of the at least one video data and the at least one audio data, calculating an amount of first data of the collected data, which has a first total reproduction time which is shorter than a second reproduction time of second data of the collected data, and retrieving the data of which total reproduction time is shorter among the collected video data or the collected audio data, while the data of which total reproduction time is longer is reproduced.

The calculating a total reproduction time may include calculating a total reproduction time of a video corresponding to currently collected video data from among the at least one video data and a total reproduction time of an audio corresponding to currently collected audio data from among the at least one audio data.

The retrieving data of which total reproduction time is shorter may include identifying a location of the data of which total reproduction time is shorter and identifying time index information.

A method for playing a moving picture file in which at least one video data and at least one audio file or data is arranged non-sequentially, according to an exemplary embodiment, includes collecting video information of each of the at least one video data or audio information of each of the at least one audio data, and if subsequent information of collected video information is the same as collected video information or subsequent information of collected audio information is the same as collected audio information and predetermined conditions are satisfied, collecting data corresponding to the homogenous information as long as the predetermined conditions are satisfied.

The predetermined conditions may include collecting at least two of the video information and collecting at least two of the audio information.

The method may further include, if subsequent information of the collected video information or the collected audio information is different from the collected video information or the collected audio information or predetermined conditions are not satisfied, moving to a location where the heterogeneous information is located and collecting data corresponding to the heterogeneous information.

The location where heterogeneous information is located may be obtained by identifying the location where homogeneous information is located and identifying time index information, and may be a location where first priority heterogeneous information from among data of heterogeneous information is located.

The extension of the moving picture file may include at least one of mkv, asf, mp2, ps, ts, and mp.

An apparatus for playing a moving picture file, according to another exemplary embodiment, includes a storage unit in which at least one video data and at least one audio data is arranged non-sequentially, a reproduction time calculating unit which calculates a total reproduction time of the at least one video data and the at least one audio data, a data amount calculating unit which calculates an amount of first data of collected video and audio data which has a total reproduction time which is shorter than a second reproduction time of second data of the collected video and audio data, and a controlling unit which retrieves the first data of which total reproduction time is shorter among the collected video data or the collected audio data while the data of which total reproduction time is longer is reproduced.

The reproduction time calculating unit may calculate a total reproduction time of a video corresponding to currently collected video data from among the at least one video data and a total reproduction time of an audio corresponding to currently collected audio data from among the at least one audio data.

The controlling unit may retrieve data of which total reproduction time is shorter by identifying a location of the data of which total reproduction time is shorter and identifying time index information.

An apparatus for playing a moving picture file, according to another exemplary embodiment, includes a storage unit in which at least one video data and at least one audio data is arranged non-sequentially, an individual information collecting unit which collects video information of each of the at least one video data or audio information of each of the at least one audio data, and a homogeneous information collecting unit which, if subsequent information of collected video information is the same as the collected video information or subsequent information of collected audio information is the same as the collected audio information and predetermined conditions are satisfied, collecting data corresponding to the homogenous information as long as the predetermined conditions are satisfied.

The homogeneous information collecting unit may collect data corresponding to homogeneous information including at least two of the collected video information and at least two of the collected audio information.

The apparatus may further include a heterogeneous information collecting unit which, if subsequent information of collected video information or collected audio information is different from the collected video information or the collected audio information or predetermined conditions are not satisfied, moving to a location where the heterogeneous information is located and collecting data corresponding to the heterogeneous information.

The location where heterogeneous information is located may be obtained by identifying the location where homogeneous information is located and identifying time index information and may be a location where first priority heterogeneous information from among data of heterogeneous information is located.

The extension of the moving picture file may include at least one of mkv, asf, mp2, ps, ts, and mp.

According to various exemplary embodiments, the number of operations may be reduced when individual audio and video information is collected.

### BRIEF DESCRIPTION OF THE DRAWINGS

The above and/or other aspects will be more apparent by describing certain exemplary embodiments with reference to the accompanying drawings, in which:

FIG. 1 is a schematic view illustrating a moving picture playing apparatus according to an exemplary embodiment;

FIG. 2 is a schematic view illustrating a moving picture playing apparatus according to another exemplary embodiment;

FIG. 3 is a flowchart illustrating a method for playing a moving picture according to an exemplary embodiment; and

FIG. 4 is a flowchart illustrating a method for playing a moving picture according to another exemplary embodiment.

### DETAILED DESCRIPTION OF THE EXEMPLARY EMBODIMENTS

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of the exemplary embodiments. However, the exemplary embodiments can be practiced without those specifically defined matters. Also, well-known functions or constructions are not described in detail since they would obscure the application with unnecessary detail.

First of all, a method for compressing a moving picture file will be explained briefly to provide better understanding of the exemplary embodiments.

The method for compressing a moving picture file may be broadly classified into an interleaved method and a non-interleaved method.

According to the interleaved method, video data and audio data such as moving picture files having an extension of avi, mp4, mov, qt, and 3gp are stored internally as being interleaved alternately, while according to the non-interleaved method, video data and audio data such as moving picture files having an extension of mkv, asf, mp2, ps, ts, and mp are stored as a group.

Hereinafter, the exemplary embodiments will be explained in detail with reference to corresponding drawings.

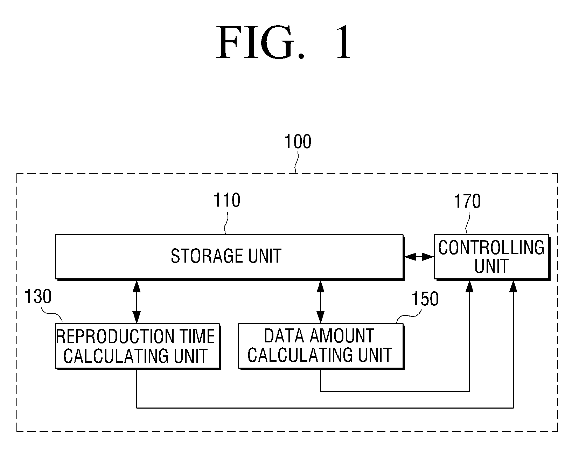

FIG. 1 is a schematic view illustrating a moving picture playing apparatus according to an exemplary embodiment. As illustrated in FIG. 1, the moving picture playing apparatus 100 comprises a storage unit 110, a reproduction time calculating unit 130, a data amount calculating unit 150, and a controlling unit 170.

The storage unit 110 stores a moving picture file by arranging at least one of video data and audio data non-sequentially.

For example, video information corresponding to video data and audio information corresponding to audio data are not arranged sequentially and instead, a moving picture file may be stored in a group of video data and a group of audio data.

In addition, the extension of a moving picture file may include mkv, asf, mp2, ps, ts, and mp storing video data and audio data in a non-interleaved method.

Herein, a moving picture file stored using the non-interleaved method may be reproduced as the location of video and audio information which should be reproduced at the same time is identified, and an information collecting module moves to the identified location to retrieve the video and audio information.

In addition, a moving picture file may be stored in the storage unit 110 such that at least one video data and at least one audio data are arranged sequentially.

For example, audio data and video data may be stored alternately in the storage unit 110 as in the case of an avi file.

The reproduction time calculating unit 130 calculates a total reproduction time of at least one video data and at least one audio data stored in the storage unit 110.

Herein, the reproduction time calculating unit 130 may calculate a total reproduction time of a video corresponding to currently collected video data from among at least one video data, and a total reproduction time of an audio corresponding to currently collected audio data from among at least one audio data.

In other words, a total reproduction time of a video corresponding to currently collected video data and a total reproduction time of an audio corresponding to currently collected audio data is calculated.

The data amount calculating unit 150 calculates the amount of the collected video data and the collected audio data of which total reproduction time is shorter than a predetermined total reproduction time, while data of which total reproduction time is longer is reproduced.

For example, if it is assumed that a total reproduction time of currently collected video data is 1 second and a total reproduction time of currently collected audio data is 0.5 second, the data amount calculating unit 150 calculates the amount of collected audio data which has a total reproduction that is shorter than 1 second, which is the reproduction time of video data of which total reproduction time is longer.

That is, the data amount calculating unit 150 calculates the amount of collected data of which total reproduction time is shorter during a total reproduction time.

The controlling unit 170 collects data which is stored in the storage unit 110 and has a shorter total reproduction time among the amount of data calculated by the data amount calculating unit 150, which calculates the amount of collected data of which total reproduction time is shorter than a predetermined total reproduction time, while data of which total reproduction time is longer is reproduced.

For example, if it is assumed that a total reproduction time of currently collected video data is 1 second and a total reproduction time of currently collected audio data is 0.5 second, the data amount calculating unit 150 calculates the amount of collected audio data of which a total reproduction is shorter than 1 second which is the reproduction time of video data of which total reproduction time is longer. If the amount of collected data of the calculated audio data is 2 seconds, audio data corresponding to 2 seconds may be collected for 1 second which is the reproduction time of video data.

Herein, the controlling unit 170 may retrieve data having a shorter total reproduction time by identifying the location of the data and identifying time index information.

That is, in order to retrieve currently collected video and audio information, the controlling unit 170 may move to a location where data to be retrieved is located and retrieve video or audio information equal to the amount of collected data. In this case, the controlling unit 170 may move to a location where data to be retrieved is located using information regarding the location of video data or audio data and time index.

Accordingly, the moving picture playing apparatus according to an exemplary embodiment does not search individual video and audio information whenever it is necessary to collect the video and audio information. Instead, the moving picture playing apparatus calculates the amount of currently collected data and calculates the amount of collected data before the currently remaining information is used up using a total reproduction. Therefore, the moving picture playing apparatus searches information and moves to a searched location less frequently. Accordingly, the number of movements of a laser pick-up is reduced when an ODD is used and the number of resetting network and remote search overhead may also be reduced when a remote server is used.

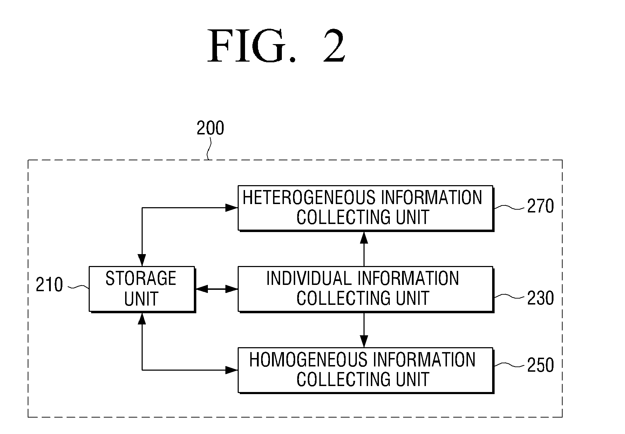

FIG. 2 is a schematic block diagram illustrating a moving picture playing apparatus according to another exemplary embodiment. As illustrated in FIG. 2, the moving picture playing apparatus 200 comprises a storage unit 210, an individual information collecting unit 230, a homogeneous information collecting unit 250, and a heterogeneous information collecting unit 270.

A moving picture file is stored in the storage unit 210 such that at least one video data and at least one audio data are arranged non-sequentially.

For example, video information corresponding to video data and audio information corresponding to audio data may not be arranged sequentially and instead, a moving picture file may be stored in a group of video data and a group of audio data.

In addition, the extension of a moving picture file may include mkv, asf, mp2, ps, ts, and mp storing video data and audio data in a non-interleaved method.

Herein, a moving picture file stored using the non-interleaved method may be reproduced as the location of video and audio information which should be reproduced at the same time is identified, and an information collecting module moves to the identified location to collect the video and audio information.

The individual information collecting unit 230 collects video information of each of at least one video data and audio information of each of at least one audio data stored in the storage unit 210.

That is, the individual information collecting unit 230 collects individual video information corresponding to each of at least one video data or individual audio information corresponding to each of at least one audio data.

If subsequent information of video information or audio information collected by the individual information collecting unit 230 is the same kind of video information or audio information as the collected video information or audio information and predetermined conditions are satisfied, the homogenous information collecting unit 250 collects data corresponding to the homogeneous information as long as the predetermined conditions are satisfied. It is to noted that the subsequent information may be additional video and additional audio information that is adjacent to the collected video and audio information.

That is, if subsequent (or adjacent) information of collected video information is the same as the collected video information or subsequent (or adjacent) information of collected audio information is the same as the collected audio information, the homogenous information collecting unit 250 collects data corresponding to the homogenous information as long as predetermined conditions, which set the amount of information to be collected, are satisfied.

Herein, the homogenous information collecting unit 250 may collect data corresponding to homogenous information which has at least two video information, or two audio information collected by the individual information collecting unit 230.

For example, if subsequent information of currently collected video information is video information and it is determined that at least two homogeneous information is collected, at least two data corresponding to the video information is collected.

If subsequent information of video information or audio information collected by the individual information collecting unit 230 is different from video information or audio information from the collected video information or audio information, or predetermined conditions are not satisfied, the heterogeneous information collecting unit 270 moves to a location where heterogeneous information is located and collects data corresponding to the heterogeneous information.

That is, if homogeneous information is collected as long as predetermined conditions are satisfied or subsequent information is heterogeneous information, the heterogeneous information collecting unit 270 moves to a location where heterogeneous information is located and retrieves data corresponding to the heterogeneous information.

Herein, the location where heterogeneous information is located may be obtained by identifying the location where homogeneous information is located and identifying time index information and may be a location where first priority heterogeneous information from among data of heterogeneous information is located.

For example, if subsequent information is heterogeneous information or predetermined conditions are not satisfied, the heterogeneous information collection unit 270 moves to the nearest location where heterogeneous information is located using information regarding the location of heterogeneous information and time index.

Accordingly, the moving picture file playing apparatus according to another exemplary embodiment does not search individual video and audio information whenever it is necessary to retrieve the video and audio information. Instead, the moving picture playing apparatus collects homogeneous information as much as possible and moves to a location where heterogeneous information is located. Therefore, the moving picture playing apparatus searches information and moves to a searched location less frequently. Accordingly, the number of movements of a laser pick-up device is reduced when an ODD is used, the number of times a network is reset is reduced, and remote search overhead may also be reduced when a remote server is used.

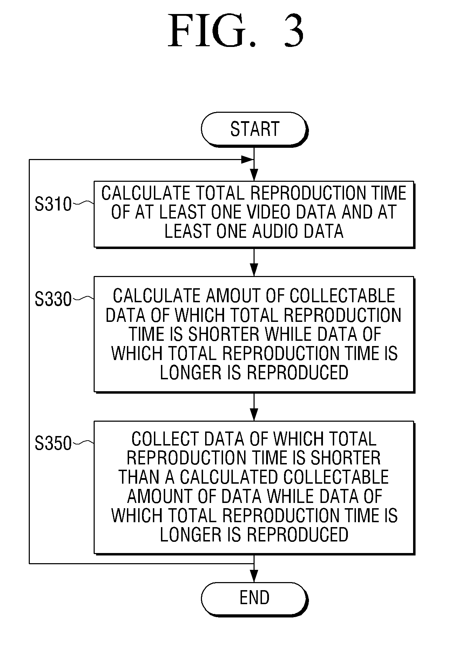

FIG. 3 is a flowchart illustrating a method for playing a moving picture file according to an exemplary embodiment.

First of all, a total reproduction time of each of at least one video data and at least audio data is calculated (operation S31 0).

In the exemplary embodiment, the step of calculating a total reproduction time represents calculating a total reproduction time of a video corresponding to currently collected video data from among at least one video data and a total reproduction time of an audio corresponding to currently collected audio data from among at least one audio data.

In other words, a total reproduction time of a video corresponding to currently collected video data and an audio corresponding to currently collected audio data is obtained. That is, a total individual display time of currently collected video data and audio data is obtained.

Subsequently, the amount of collected data of which total reproduction time is shorter is calculated while data of which total reproduction time is longer is reproduced (operation S330).

For example, if it is assumed that a total reproduction time of currently collected video data is 1 second and a total reproduction time of currently collected audio data is 0.5 second, the amount of collected audio data of which a total reproduction is shorter than a predetermined reproduction time, is calculated for 1 second which is the reproduction time of video data of which total reproduction time is longer.

That is, the amount of collected data of which total reproduction time is shorter during a total reproduction time is calculated.

Subsequently, an amount of data having a shorter total reproduction time, similar to the amount of data calculated in operation S330, is retrieved. That is, the amount of collected data of which total reproduction time is shorter is retrieved while data of which total reproduction time is longer is reproduced (operation S350).

In the exemplary embodiment, data having a shorter total reproduction time may be collected by identifying the location of the data having a shorter total reproduction time and time index information.

In the exemplary embodiment, the operations S310 to S350 may be performed repeatedly.

The moving picture file playing method according to an exemplary embodiment comprises obtaining a total individual display time of currently collected video and audio, calculating the amount of collected data of which display time is shorter, moving to a location where information to be collected is located, and collecting data equal to the amount of calculated data. In this case, the operation of moving to a location where information to be retrieved is located may be performed using information regarding the location of the data and time index.

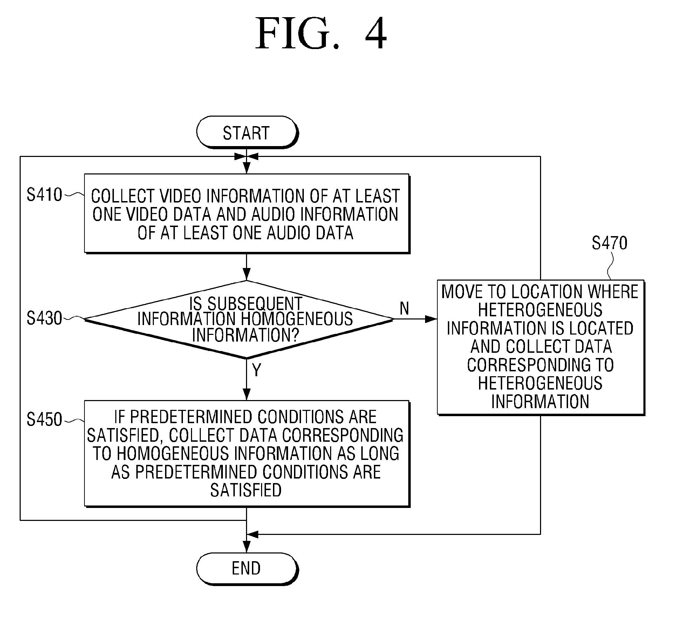

FIG. 4 is a flowchart illustrating a method for playing a moving picture file according to another exemplary embodiment.

First of all, video information regarding each of at least one video data and audio information regarding each of at least one audio data is collected (operation S410).

That is, individual video information corresponding to each of at least one video data or individual audio information corresponding to each of at least one audio data is collected.

Subsequently, whether subsequent information of video information regarding each of at least one video data and audio information regarding each of at least one audio data is homogeneous information is determined (operation S430). If it is determined that the subsequent information of collected video information or collected audio information is the same as collected video information or collected audio information and predetermined conditions are satisfied, data corresponding to the homogeneous information is collected as long as the predetermined conditions are satisfied (operation S450).

That is, if subsequent information of collected video information is the same as the collected video information or subsequent information of collected audio information is the same as the collected audio information, data corresponding to the homogenous information is collected as long as predetermined conditions, which set the amount of information to be collected, are satisfied.

Herein, the predetermined conditions may include the collection of two video information or the collection of two audio information.

For example, if subsequent information of currently collected video information is video information and it is determined that at least two homogeneous information is collected, at least two data corresponding to the video information is collected.

If subsequent information of collected video information or collected audio information is different from video information or audio information of the collected video information or audio information, or predetermined conditions are not satisfied, a moving picture file playing apparatus moves to a location where heterogeneous information is located to retrieve data corresponding to the heterogeneous information (operation S470).

Herein, the location where heterogeneous information is located may be obtained by identifying the location where homogeneous information is located and time index information and may be a location where first priority heterogeneous information from among data of heterogeneous information is located.

The method for playing a moving picture file according to another exemplary embodiment does not search or move to individual video and audio data if it is impossible to sequentially retrieve the video data and audio data since they are not adjacent to each other. Instead, the present moving picture file playing method collects a plurality of unit video and audio so that the number of search and move operations may be reduced when individual audio and video information is collected.

Although a few exemplary embodiments have been shown and described, it would be appreciated by those skilled in the art that changes may be made in the exemplary embodiments without departing from the principles and spirit of the inventive concept, the scope of which is defined in the claims and their equivalents.

## Claims

1. A method for playing a moving picture file in which at least one video data and at least one audio data is arranged non-sequentially, the method comprising:
collecting the at least one video data and the at least one audio data;
calculating a total reproduction time of the at least one video data and a total reproduction time of the at least one audio data;
calculating an amount of first data of the collected video data and the collected audio data, which has a first total reproduction time which is shorter than a second reproduction time of second data of the collected video data and the collected audio data; and
retrieving the data of which the total reproduction time is shorter among the first data and the second data while the data of which the total reproduction time is longer is reproduced.

2. The method as claimed in claim 1, wherein the calculating a total reproduction time comprises calculating a total reproduction time of a video corresponding to currently collected video data from among the at least one video data and a total reproduction time of an audio corresponding to currently collected audio data from among the at least one audio data.

3. The method as claimed in claim 1 or 2, wherein the collecting the data of which total reproduction time is shorter comprises collecting data of which total reproduction time is shorter by identifying a location of the data of which total reproduction time is shorter and identifying time index information.

4. A method for playing a moving picture file in which at least one video data and at least one audio file is arranged non-sequentially, the method comprising:
collecting video information of each of the at least one video data and audio information of each of the at least one audio data; and if subsequent information of the collected video information is the same as the collected video information or subsequent information of the collected audio information is the same as collected audio information and predetermined conditions are satisfied, collecting data corresponding to the homogenous information,
wherein the subsequent information is additional video information and additional audio information that is adjacent to the collected video information and the collected audio information.

5. The method as claimed in claim 4, wherein the predetermined conditions include collecting at least two of the video information and collecting at least two of the audio information.

6. The method as claimed in claim 4 or 5, further comprising:
if the subsequent information of collected video information or the subsequent information of collected audio information is different from the collected video information or the collected audio information, or the predetermined conditions are not satisfied, moving to a location where the heterogeneous information is located and collecting data corresponding to the heterogeneous information.

7. The method as claimed in claim 6, wherein the location where heterogeneous information is located is obtained by identifying a location where homogeneous information is located and time index information, and is a location where first priority heterogeneous information from among data of heterogeneous information is located.

8. The method as claimed in anyone of claims 1 to 4, wherein an extension of the moving picture file includes at least one of mkv, asf, mp2, ps, ts, and mp.

9. An apparatus for playing a moving picture file, the apparatus comprising:
a storage unit in which at least one video data and at least one audio data is arranged non-sequentially;
a reproduction time calculating unit which calculates a total reproduction time of the at least one video data and the at least one audio data;
a data amount calculating unit which calculates an amount of of first data of the collected video data and the collected audio data, which has a first total reproduction time which is shorter than a second reproduction time of second data of the collected video data and the collected audio data; and
a controlling unit which retrieves the data of which the total reproduction time is shorter among the first data and the second data while the data of which total reproduction time is longer is reproduced.

10. The apparatus as claimed in claim 9, wherein the reproduction time calculating unit calculates a total reproduction time of a video corresponding to currently collected video data from among the at least one video data and a total reproduction time of an audio corresponding to currently collected audio data from among the at least one audio data.

11. The apparatus as claimed in claim 9 or 10, wherein the controlling unit collects the data of which total reproduction time is shorter by identifying a location of the data of which total reproduction time is shorter and identifying time index information.

12. An apparatus for playing a moving picture file, comprising:
a storage unit in which at least one video data and at least one audio data is arranged non-sequentially;
an individual information collecting unit which collects video information of each of the at least one video data or collects audio information of each of the at least one audio data; and
a homogeneous information collecting unit which, if subsequent information of collected video information is the same as the collected video information or subsequent information of the collected audio information is the same as the collected audio information, and predetermined conditions are satisfied, collecting data corresponding to the homogenous information,
wherein the subsequent information is additional video information and additional audio information that is adjacent to the collected video information and the collected audio information.

13. The apparatus as claimed in claim 12, wherein the homogeneous information collecting unit collects data corresponding to homogeneous information including at least two of the collected video information and at least two of the collected audio information.

14. The apparatus as claimed in claim 12 or 13, further comprising:
a heterogeneous information collecting unit which, if subsequent information of collected video information or subsequent information of collected audio information is different from the collected video information or the collected audio information or
predetermined conditions are not satisfied, moving to a location where the heterogeneous information is located and collecting data corresponding to the heterogeneous information.

15. The apparatus as claimed in claim 14, wherein the location where heterogeneous information is located is obtained by identifying the location where homogeneous information is located and identifying time index information and is a location where first priority heterogeneous information from among data of heterogeneous information is located.
